Europäisches Patentamt

European Patent Office

Office européen des brevets

(11) Publication number: **0 278 208**
**A1**

## EUROPEAN PATENT APPLICATION

(21) Application number: 87850044.6

(22) Date of filing: 06.02.87

(51) Int. Cl.4: **B22D 17/10** , B22D 19/00 , C22C 37/06 , F16J 10/04

(43) Date of publication of application:
**17.08.88 Bulletin 88/33**

(84) Designated Contracting States:
**AT DE FR GB IT SE**

(71) Applicant: **Weartech Limited**
**1065-3 Nomachi Takaoka**
**Toyama(JP)**

(72) Inventor: **Cohen, Richard B.**
**1065-3, Nomachi**
**Takaoka Toyama(JP)**

(74) Representative: **Axelsson, Rolf et al**
**Kransell & Wennborg AB Sandhamnsgatan**
**42**
**S-115 28 Stockholm(SE)**

(54) **Wear resistant sleeve for use in a die casting machine.**

(57) A bimetallic plunger sleeve and/or sprue for use in a die casting machine wherein the inner sleeve is formed from a highly wear resistant metal and the outer sleeve is formed from heat shock failure resistant metal which retains the inner sleeve under a compressive force during die casting.

FIG.1

EP 0 278 208 A1

The present invention relates to die-casting and more particularly to a sleeve and/or sprue for use in a die-casting machine.

Die-casting machines are widely used for the mass production of identical castings formed from, e.g. aluminium, magnesium, zinc and copper and various alloys of these metals.

The plunger sleeve and/or sprue of existing machines is usually constructed of a die steel containing less than 0.45% C, such as AISI D2 tool steel. During operation of the die casting machine, temperature and pressure in the plunger sleeve and/or sprue rise to high levels and then fall. This repeated cycling of temperature and pressure combined with the repeated passage of the plunger tip causes erosion, thermal cracking, and wear in the bore of the plunger sleeve and/or sprue thus requiring regular replacement of the sleeve and/or sprue. In order to reduce erosion and wear the carbon content of the construction material should be increased but this leads to increased thermal cracking and the danger of catastrophic failure of the plunger sleeve and/or sprue. On the other hand, in order to reduce thermal cracking, the carbon content should be reduced but this leads to an increased wear rate.

The present invention aims to ameliorate the aforementioned problems and by using a shrink fit bimetal construction the aforementioned problems can be alleviated, leading to increased service life for the sleeve and/or sprue. The aforementioned plunger sleeve and/or sprue are constructed from an inner sleeve which is made of a material having a high resistance wear at high temperatures, said inner sleeve being shrunk-fit into an outer sleeve which is made from a material which will not plasticly deform under the stress of the shrink-fit. The inner sleeve being placed under compression by the outer sleeve.

Plunger sleeves and/or sprues of the prior art are monolithic and so if a highly wear resistant metal is used their strength and thermal cracking resistance are greatly reduced compared to the generally used AISI D2 tool steel. However, the inner sleeve of this invention is under compression and so is able to resist thermal cracking and mechanical failure and so a much greater carbon content becomes allowable, thus increasing wear resistance at high temperatures and thus extending service life. The outer sleeve of a plunger sleeve and/or sprue of this invention does not make direct contact with either the molten metal or the plunger tip and so is not subject to wear. Therefore the outer sleeve can be made of any suitable constructional steel with high heat shock resistance and high-temperature strength. The compression of the inner sleeve by the outer sleeve largely prevents the formation of thermal fractures in the inner sleeve, and prevents any fractures so formed from growing in the inner sleeve.

In other words, by constructing the plunger sleeve and/or sprue from two different materials shrunk fit together, the inner sleeve can be made highly wear resistant and the outer sleeve can be made mechanically strong and resistant to heat shock failure, thus ameliorating the inherent problem of the previously used sleeves, etc. and greatly increasing service life.

The preferred ratio of the wall thickness of the inner sleeve to the outer sleeve of this invention is in the range 1 to 0.01 with the most effective range being 0.14 to 0.05.

The present invention will now be described by way of example with reference to the accompanying drawings, in which:-

Fig. 1 is a longitudinal cross section view of a bimetallic plunger sleeve in accordance with the present invention;

Fig. 2 is a longitudinal cross section view of a sleeved sprue in accordance with the present invention;

Fig. 3 is a longitudinal cross section view of a combined sleeve and sprue in accordance with another embodiment of the invention; and

Fig. 4 is a schematic part sectional view of a die casting machine incorporating conventional sleeve and sprue.

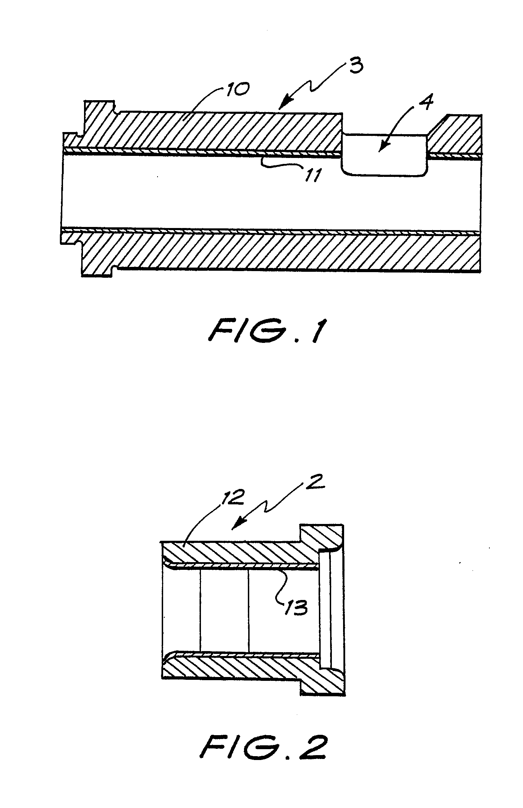

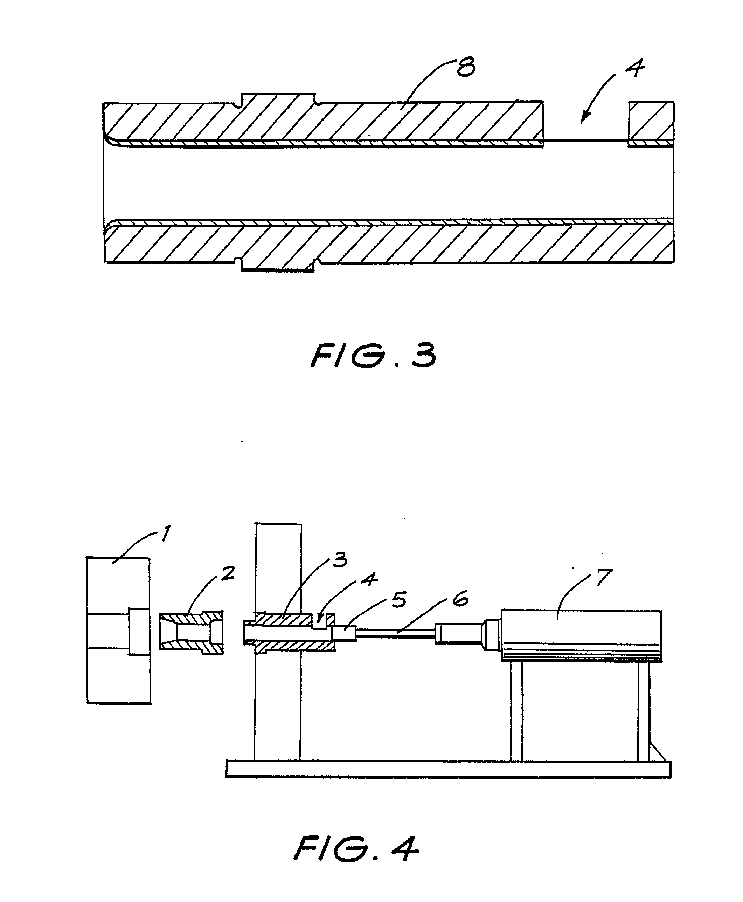

Fig. 1 shows a plunger sleeve 3 comprising an outer sleeve 10 and an inner shrink fitted sleeve 11. Similarly, the sprue 2 of Fig. 2 comprises an outer sleeve 12 and an inner shrink fitted sleeve 13 while the combined plunger sleeve and sprue 8 of Fig. 3 is formed by respective inner and outer sleeves.

Fig. 4 shows a die-casting machine comprising a fixed die 1; a sprue 2; a plunger sleeve 3 having a molten metal inlet 4; a plunger tip 5 of plunger rod 6; and an hydraulic cylinder 7. In operation molten metal is poured into the inlet 4 and then by the action of the hydraulic cylinder 7 acting on the plunger rod 6 and the plunger tip 5 the molten metal is force through the plunger sleeve 3 and the sprue 2 into the fixed die 1 and/or moveable die (not illustrated) where the metal solidifies under pressure to produce a casting of desired shape. The aforementioned plunger sleeve and/or sprue can be as separate elements (see Figs. 1 and 2) or as a combined single element (Fig. 3).

Examples of the comparative effect of using embodiments of this invention in relation to prior art components will now be described.

## Example 1

### Details of Test Piece

Die-casting machine plunger sleeve Length: 400mm
Inner Sleeve Wall Thickness: 2mm
Outer Sleeve Wall Thickness: 30mm
Inner Sleeve Bore Diameter: 64mm

### Chemical Composition: Table 1

|  | C | Si | Mn | Cr | Mo | Fe |
|---|---|---|---|---|---|---|
| Inner Sleeve | 3% | 0.5% | 1% | 27% |  | Remainder |
| Outer Sleeve | 0.35% | 0.6% | 0.6% | 1.2% | 0.3% | Remainder |

### Coefficient of Expansion: Table 2

| Inner Sleeve | 9.9 $\mu$m/m/$^{\circ}$C |
|---|---|
| Outer Sleeve | 7.4 $\mu$m/m/$^{\circ}$C |

### Composition of Molten Metal Used for Casting: Table 3

| Cu | Si | Al |
|---|---|---|
| 0.7% | 13% | Remainder |

### Details of a Prior Art - Single Piece Plunger Sleeve

### Chemical Composition: Table 4

| C | Si | Mn | Cr | Mo | Fe |
|---|---|---|---|---|---|
| 0.4% | 1.0% | 0.4% | 5.0% | 1.25% | Remainder |

### Comparison of Results: Table 5

|  | Test Piece | Prior Art Plunger Sleeve |
|---|---|---|
| Days to Failure | 200 | 60 |
| Total Castings | 201,075 | $\simeq$ 50,000 |
| Ave. Life of Plunger Tip | 40,215 | 3,000 |

## Example 2

A die-casting machine sprue using the same construction and composition as the plunger sleeves of the present invention and of the prior art as employed in Example 1 and casting the same material.

### Table 6

|  | Test Piece | Prior Art Sprue |
|---|---|---|
| Test Period (Days) | 80 | 45 |
|  | (Removed for Analysis) | (Failure) |
| Total Castings | 46,849 | 25,000 |
| Max. Wear | 0.45mm | 1.05mm |
| Plunger Tip Life | 15,000 | 6,000 |

As can be seen from Examples 1 and 2 above, use of articles in accordance with the present invention not only give greatly increased service life to the sleeve and/or sprue, but for those examples also increase the life of the plunger tip at least 2.5 times.

In a preferred form the chemical constituents (by weight) of the inner sleeve are C 0.7 to 4.0%; Si less than 4.0%; Mn less than 15.0%; Cr less than 40.0% and optionally Ni less than 15.0%; W less than 20.0%; Co less than 15%; Ti less than 15.0%; Mo less than 15.0%; V less than 15.%; and B less than 1.0%.

**Claims**

1. A plunger sleeve and/or sprue for use in a die-casting process, said sleeve and/or sprue being of bimetallic construction comprising an inner sleeve and outer sleeve which are shrink fitted together, the inner sleeve being of a metal which is resistant to wear at high temperatures and the outer sleeve being of a metal which is resistant to plastic deformation due to the stresses created by the shrink fit of the inner sleeve and the stresses which occur during operation of the process.

2. A plunger sleeve and sprue as claimed in claim 1 wherein the plunger sleeve and sprue are of a unitary construction.

3. A plunger sleeve and/or sprue as claimed in claim 1 or 2 wherein the inner sleeve has the following chemical constituents (by weight):

C       0.7 - 4.0%
Si      less than 4.0%
Mn      less than 15.0%
Cr      less than 40.0%

and optionally:

Ni      less than 15.0%
W       less than 20.0%
Co      less than 15.0%
Ti      less than 15.0%
Mo      less than 15.0%
V       less than 15.0%
B       less than 1.0%

as well as unavoidable impurities, the remainder being Fe.

4. A plunger sleeve and/or sprue as claimed in any one of the preceding claims wherein the ratio of the wall thickness of the inner sleeve to that of the outer sleeve is in the range of 1 to 0.01.

5. A plunger sleeve and/or sprue as claimed in claim 4 wherein the ratio is in the range 0.14 to 0.05.

FIG.1

FIG.2

FIG . 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | CH-A- 159 987 (KRUPP) <br> * all claims * <br><br> --- | 1-3 | B 22 D 17/10 <br> B 22 D 19/00 <br> C 22 C 37/06 <br> F 16 J 10/04 |
| A | DE-B-2 352 546 (CATERPILLAR) <br> * claims 1-2 * <br><br> --- | 1-3 | |
| A | DE-A-2 817 643 (D. LOMAX) <br> * page 3, line 14-16, page 4, lines 1-20 * <br><br> --- | 1 | |
| A | DE-A-1 450 426 (O. SCHUCHMACHER) <br> * page 1, lines 6-10 * <br><br> --- | 1 | |
| A | CHEMICAL ABSTRACTS, vol. 105, no. 6, 11th August 1986, page 259, column 2, abstract no. 47041r, Columbus, Ohio, US; T. MORI et al.: "Abrasion-resistant alloyed cast irons", & JP - A - 61 44154 (HITACHI METALS) 03-03-1986 <br><br> ----- | 1 | **TECHNICAL FIELDS SEARCHED (Int. Cl.4)** <br><br> B 22 D 17/00 <br> B 22 D 19/00 <br> C 22 C 37/00 <br> F 16 J 10/00 |

The present search report has been drawn up for all claims

| Place of search | Date of completion of the search | Examiner |
|---|---|---|
| BERLIN | 18-09-1987 | GOLDSCHMIDT G |